# FASCICULE DE BREVET EUROPEEN

(11) **EP 3 487 866 B1**
(45) Date de publication et mention de la délivrance du brevet: **31.03.2021**
(21) Numéro de dépôt: 17764864.9
(22) Date de dépôt: 24.07.2017
(51) Int. Cl.: C08F 236/06, C07F 17/00, C07F 5/00

(54) **SYSTEME CATALYTIQUE PREFORME COMPRENANT UN METALLOCENE DE TERRE RARE**
VORGEFORMTES KATALYTISCHES SYSTEM MIT EINEM SELTENERDMETALLOCEN
PREFORMED CATALYTIC SYSTEM COMPRISING A RARE-EARTH METALLOCENE

(30) Priorité: 25.07.2016 FR 1657101
(43) Date de publication de la demande: 29.05.2019
(73) Titulaire: Compagnie Générale des Etablissements Michelin, 63000 Clermont-Ferrand (FR)
(72) Inventeur: LAFAQUIERE, Vincent, 63040 Clermont-Ferrand Cedex 9 (FR); THUILLIEZ, Julien, 63040 Clermont-Ferrand Cedex 9 (FR)
(74) Mandataire: Gandon-Pain, Sylvie
(86) Numéro de dépôt international: PCT/FR2017/052039
(87) Numéro de publication internationale: WO 2018/020122

(56) Documents cités:
- WO-A1-2013/014383

## Description

La présente invention concerne un système catalytique préformé à base de métallocènes de terre rare, notamment utilisable dans la polymérisation des monomères tels que les diènes conjugués, l'éthylène, les α-monooléfines et leurs mélanges. L'invention porte également sur un procédé de préparation dudit système catalytique, ainsi que son utilisation dans la synthèse de polymères.

Dans la polymérisation de l'éthylène, les documents WO 9307180 et US 5109085 décrivent l'utilisation d'un précatalyseur ^{Ra}Cp₂LnCl₂Li(OEt₂)₂, composé qui sera transformé au moment de la réaction de polymérisation en catalyseur. Le document EP 0736536 décrit un procédé de préparation de dialkylmagnésiens à longues chaînes obtenus à partir d'un système catalytique comprenant ce catalyseur et un dialkylmagnésien. Le document WO 2013014383 décrit l'utilisation dans la polymérisation d'éthylène d'un système catalytique formé in situ à partir d'un mélange contenant un sel de terre rare, un cyclopentadiène ou un précurseur de ligand, et un alkylmagnésien dans la polymérisation d'éthylène. Le dialkylmagnésien à longue chaîne ainsi préparé peut réagir avec des agents de modification pour former des polyéthylènes fonctionnalisés ou avec un autre monomère pour former des copolymères blocs.

Pour la polymérisation de diènes conjugués, le document US 6383971 décrit un système catalytique comprenant un sel de terre rare, un dérivé de cyclopentadiène en tant que précurseur de ligand et un aluminoxane.

Pour la polymérisation de styrène et d'isoprène, les documents Comptes Rendus de l'Académie des Sciences Chimie, 2008, 11, 595-602 et Eur. J. Inorg. Chem., 2010, 2867-2876 décrivent des catalyseurs d'hémi-lanthanidocène de borohydrure de terre rare et de magnésium, qui sont soit obtenus en deux étapes avec isolation du précatalyseur, soit formés puis utilisés in situ.

Les systèmes catalytiques à base de métallocènes de terre rare sont connus : ils sont par exemple décrits dans les demandes de brevet EP 1 092 731, WO 2004035639 et WO 2007054224 au nom des Demanderesses pour être utilisés dans la polymérisation de monomères tels que les diènes conjugués, l'éthylène et les α-monooléfines. Ils sont le produit de réaction d'un métallocène de lanthanide et d'un co-catalyseur dans un solvant hydrocarboné. Ces systèmes catalytiques, ainsi formés, ont l'inconvénient de voir leur activité catalytique diminuer au stockage. Pour garantir les spécifications du polymère à synthétiser, il est alors nécessaire dans le procédé de polymérisation de compenser les fluctuations de l'activité catalytique du système catalytique qui résultent de son stockage. Cette compensation passe par le réajustement des paramètres du procédé de polymérisation tels que les quantités respectives des monomères et du système catalytique. Il s'en suit qu'une phase de réglage des paramètres du procédé de polymérisation et une phase de mise en stabilité de l'outil de polymérisation sont requises avant que l'outil ne soit en mesure de produire le polymère en spécification. Ces phases de réglage et de mise en stabilité ont pour effet de diminuer la productivité de l'outil de production et de complexifier sa conduite.

Pourtant, certains de ces systèmes catalytiques sont d'intérêt dans la mesure où ils permettent d'accéder à des copolymères d'éthylène et de 1,3-butadiène de microstructure originale, du fait de la formation de motifs cycliques dans la chaîne copolymère, copolymères d'intérêt pour être utilisés dans des formulations de caoutchouc pour l'application pneumatique, tels que décrits dans la demande de brevet WO 2014114607 au nom des Demanderesses. Il est donc d'intérêt de trouver une solution pour améliorer la stabilité dans le temps de l'activité catalytique de ces systèmes catalytiques, notamment la stabilité au stockage.

Les Demanderesses, poursuivant leurs efforts, ont découvert un système catalytique à base d'un métallocène de terre rare présentant une stabilité de l'activité catalytique améliorée au stockage, ce qui permet de résoudre les problèmes rencontrés mentionnés précédemment. Le système catalytique selon l'invention a la particularité d'être un système catalytique de type « préformé ».

Ainsi, un premier objet de l'invention est un système catalytique à base au moins :
- d'un monomère de préformation étant l'éthylène ou un mélange d'éthylène et d'un diène conjugué
- d'un métallocène de formule (la) ou (Ib)
- d'un composé organométallique à titre de co-catalyseur,

   {P(Cp¹)(Cp²)Y} (Ia)

   Cp³Cp⁴Y (Ib)
- Y désignant un groupe comportant un atome de métal qui est une terre rare,
- Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
- P étant un groupe pontant les deux groupes Cp¹ et Cp², et comprenant un atome de silicium ou de carbone.

L'invention concerne aussi un procédé pour préparer le système catalytique conforme à l'invention.

L'invention porte également sur un procédé de préparation d'un polymère qui comprend la polymérisation d'un monomère en présence du système catalytique conforme à l'invention.

### I. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants du système catalytique, on entend le mélange de ces constituants, ou le produit de la réaction d'une partie ou de la totalité de ces constituants entre eux.

Dans la présente demande, on entend par métallocène un complexe organométallique dont le métal, en l'espèce l'atome de terre rare, est lié à deux groupes Cp³ et Cp⁴ ou à une molécule de ligand constitué de deux groupes Cp¹ et Cp² reliés entre eux par un pont P. Ces groupes Cp¹, Cp², Cp³ et Cp⁴, identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Le système catalytique conforme à l'invention a pour caractéristique essentielle d'être un catalyseur préformé à partir d'éthylène ou un mélange d'éthylène et d'un diène conjugué. Autrement dit, le monomère de préformation est l'éthylène ou un mélange d'éthylène et d'un diène conjugué. Lorsque le monomère de préformation est un mélange d'éthylène et d'un diène conjugué, la fraction molaire d'éthylène dans le monomère de préformation peut varier dans une large mesure, notamment dans un domaine allant de 0.01 à moins de 1. Le diène conjugué utile à la préformation peut être un diène conjugué ayant de 4 à 8 atomes de carbone, est de préférence un 1,3-diène, de manière plus préférentielle le 1,3-butadiène ou l'isoprène. Le monomère de préformation est utilisé de préférence selon un rapport molaire (monomère de préformation / métal du métallocène) allant de 5 à 1000, préférentiellement de 10 à 500.

Selon une première variante de l'invention, le métallocène utilisé comme constituant de base dans le système catalytique conforme à l'invention répond à la formule (la)

{P(Cp¹)(Cp²)Y} (Ia)

dans laquelle
- Y désigne un groupe comportant un atome de métal qui est une terre rare,
- Cp¹ et Cp², identiques ou différents, sont choisis dans le groupe constitué par les groupes fluorényles, les groupes cyclopentadiényles et les groupes indényles, les groupes étant substitués ou non substitués,
- P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (Ib)

Cp³Cp⁴Y (Ib)

dans laquelle
- Y désigne un groupe comportant un atome de métal qui est une terre rare,
- Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

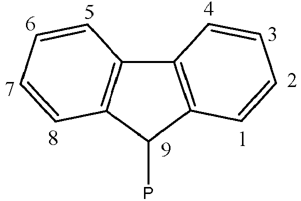

A titre de groupes cyclopentadiényles substitués, on peut citer particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

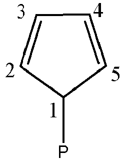

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

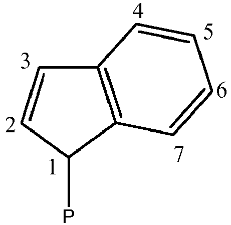

Selon un mode de réalisation préférentiel de l'invention, Cp¹ et Cp² sont identiques et sont choisis dans le groupe constitué par les groupes fluorényles substitués et le groupe fluorényle non substitué de formule C₁₃H₈.

Le système catalytique selon ce mode de réalisation préférentiel a la particularité de conduire à des copolymères de butadiène et d'éthylène qui comprennent en plus des unités monomères éthylène et des unités butadiène des unités cycliques 1,2-cyclohexane de formule suivante :

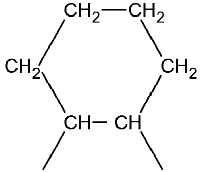

Avantageusement, Cp¹ et Cp² sont identiques et représentent chacun un groupe fluorényle non substitué de formule C₁₃H₈, représenté par le symbole Flu.

Selon un mode de réalisation préférentiel de l'invention, le symbole Y représente le groupe Met-G, avec Met désignant un atome de métal qui est une terre rare et avec G désignant un groupe comprenant le motif borohydrure BH₄ ou désignant un atome d'halogène X choisi dans le groupe constitué par le chlore, le fluor, le brome et l'iode. Avantageusement, G désigne le chlore ou le groupe de formule (II) :

(BH₄)_{(1+y)-}L_{y}-Nₓ (II)

dans laquelle
- L représente un métal alcalin choisi dans le groupe constitué par le lithium, le sodium et le potassium,
- N représente une molécule d'un éther,
- x, nombre entier ou non, est égal ou supérieur à 0,
- y, nombre entier, est égal ou supérieur à 0.

Comme éther convient tout éther qui a le pouvoir de complexer le métal alcalin, notamment le diéthyléther et le tétrahydrofuranne.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z désigne avantageusement un atome de silicium, Si.

Selon un mode de réalisation particulièrement préférentiel, le métallocène est le borohydrure de diméthylsilyl bis-fluorényle néodyme de formule (III) :

[Me₂Si(Flu)₂Nd(µ-BH₄)₂Li(THF)] (III)

dans laquelle Flu représente le groupe C₁₃H₈.

Un autre constituant de base du système catalytique conforme à l'invention est le co-catalyseur capable d'activer le métallocène vis-à-vis de la polymérisation, notamment dans la réaction d'amorçage de polymérisation. Le co-catalyseur est de manière bien connu un composé organométallique. Peuvent convenir les composés organométalliques capables d'activer le métallocène, tels que les composés organomagnésiens, organoaluminiques et organolithiens.

Le co-catalyseur est préférentiellement un organomagnésien, c'est-à-dire un composé qui présente au moins une liaison C-Mg. A titre de composés organomagnésiens on peut citer les diorganomagnésiens, en particulier les dialkylmagnésiens et les halogénures d'organomagnésien, en particulier les halogénures d'alkylmagnésien. Le composé diorganomagnésien présente deux liaisons C-Mg, en l'espèce C-Mg-C ; l'halogénure d'organomagnésien présente une liaison C-Mg. De manière plus préférentielle, le co-catalyseur est un diorganomagnésien.

Selon un mode de réalisation particulièrement préférentiel de l'invention, le co-catalyseur est un composé organométallique comportant un groupe alkyle lié à l'atome de métal. A titre de co-catalyseur, également appelé agent d'alkylation, conviennent particulièrement les alkylmagnésiens (également appelés alkylmagnésium), tout particulièrement les dialkylmagnésiens (également appelés dialkylmagnésium) ou les halogénures d'alkylmagnésien (également appelés halogénures d'alkylmagnésium), comme par exemple le butyloctylmagnésium et le chlorure de butylmagnésium. Le co-catalyseur est avantageusement le butyloctylmagnésium.

Le co-catalyseur est utilisé selon un rapport molaire (co-catalyseur / métal du métallocène) allant de préférence de 0,5 à 20, de manière plus préférentielle de 1 à 10.

Selon l'un quelconque des modes de réalisation de l'invention, le système catalytique comprend de préférence un solvant hydrocarboné. Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation.

On peut parler alors de solution catalytique qui comprend le système catalytique et le solvant hydrocarboné.

Lorsque le système catalytique est en solution, sa concentration est définie par la teneur en métal de métallocène dans la solution. La concentration en métal de métallocène a une valeur allant préférentiellement de 0,0001 à 0,05 mol/l, plus préférentiellement de 0,001 à 0,03 mol/l.

Très avantageusement, le métallocène qui constitue le système catalytique conforme à l'invention est de formule (la).

Un autre objet de l'invention est la préparation du système catalytique décrit ci-dessus.

Le procédé de préparation du système catalytique conforme à l'invention comprend les étapes a) et b) suivantes :
- a) faire réagir dans un solvant hydrocarboné le co-catalyseur et le métallocène,
- b) faire réagir le monomère de préformation avec le produit de réaction de l'étape a).

Le métallocène utilisé pour la préparation du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande WO 2007054224 A2. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

L'étape a) correspond à l'étape d'activation, communément aussi appelée alkylation, du métallocène par le co-catalyseur; l'étape b) correspond à l'étape de préformation du système catalytique.

Le solvant hydrocarboné utilisé dans la préparation du système catalytique est généralement un solvant hydrocarboné aliphatique ou aromatique, comme par exemple le méthylcyclohexane ou le toluène. Le plus souvent, il est identique au solvant de la solution catalytique définie précédemment. En effet, le solvant hydrocarboné utilisé dans la préparation du système catalytique est, de préférence, aussi le solvant de la solution catalytique.

Dans l'étape a), au solvant hydrocarboné est ajouté généralement le co-catalyseur, puis le métallocène. L'étape a) a généralement lieu à une température allant de 20 à 80°C. Le temps de réaction de l'étape a) est compris de préférence entre 5 et 60 minutes, plus préférentiellement varie de 10 à 20 minutes.

L'étape b) est réalisée généralement à une température allant de 40 à 120°C, préférentiellement de 40 à 90°C. Le temps de réaction de l'étape b) varie typiquement de 0,5 heure à 24 heures, préférentiellement de 1h à 12 h. Dans l'étape b), on ajoute le monomère de préformation au produit de réaction de l'étape a).

L'étape b) peut être suivie d'une étape c) de dégazage pour éliminer le monomère de préformation qui n'aurait pas réagi au cours de l'étape b).

Comme toute synthèse faite en présence de composé organométallique, la synthèse a lieu dans des conditions anhydres sous atmosphère inerte aussi bien pour l'étape a) que pour l'étape b) et le cas échéant l'étape c). Typiquement, les réactions sont conduites à partir de solvants et de monomères anhydres sous azote ou argon anhydre. Les étapes a), b) et c) sont conduites généralement sous agitation.

Avant d'être utilisé par exemple en polymérisation, le système catalytique ainsi obtenu en solution peut être stocké sous atmosphère inerte, par exemple sous azote ou argon, notamment à une température allant de -20°C à la température ambiante (23°C).

Un autre objet de l'invention est un procédé de préparation d'un polymère qui comprend la polymérisation d'un monomère M en présence du système catalytique conforme à l'invention. Le monomère M est à distinguer du monomère de préformation utilisé dans la préparation du système catalytique dans l'étape b) : le monomère M peut être ou ne pas être identique au monomère utilisé dans l'étape b). Le monomère M est de préférence choisi dans le groupe des monomères constitués par les diènes conjugués, l'éthylène, les α-monooléfines et leurs mélanges. A titre de diènes conjugués conviennent tout particulièrement les 1,3-diènes ayant de préférence de 4 à 8 atomes de carbone. De manière plus préférentielle, le monomère M est un 1,3-diène ayant de préférence de 4 à 8 atomes de carbone, notamment le 1,3-butadiène ou l'isoprène, ou bien un mélange de 1,3-butadiène et d'éthylène .

Selon la microstructure et la longueur des chaînes polymères préparées par le procédé conforme à l'invention, le polymère peut être un élastomère.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le monomère M peut être introduit dans le réacteur contenant le solvant de polymérisation et le système catalytique ou inversement le système catalytique peut être introduit dans le réacteur contenant le solvant de polymérisation et le monomère. Le monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. Elle est ajustée selon le monomère à polymériser.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Caractérisation des polymères par chromatographie d'exclusion stérique (SEC) :

### a) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### b) Préparation du polymère:

Il n'y a pas de traitement particulier de l'échantillon de polymère avant analyse. Celui-ci est simplement solubilisé dans du (tétrahydrofuranne + 0.1% vol. d'eau distillée) à une concentration d'environ 1 g/l. Puis la solution est filtrée sur filtre de porosité 0.45µlm avant injection.

### c) Analyse SEC:

L'appareillage utilisé est un chromatographe « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### 11.2-Préparation de systèmes catalytiques conformes à l'invention : exemples 1 à 11

Les systèmes catalytiques C1-C11 conformes à l'invention sont préparés selon le mode opératoire suivant.

Dans un réacteur contenant le solvant hydrocarboné méthylcyclohexane (MCH) ou toluène (Tol), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau I. La durée d'activation est de 10 minutes, la température de réaction est de 20 °C. (étape a)). Ensuite, le monomère de préformation qui est l'éthylène (Eth), un mélange d'éthylène et de 1,3-butadiène (Eth/Bde) ou un mélange d'éthylène et d'isoprène (Eth/Iso) est introduit dans le réacteur dans les proportions indiquées dans le tableau I, la fraction molaire d'éthylène dans les mélanges d'éthylène et de 1,3-butadiène ou d'éthylène et d'isoprène étant de 0.8. La réaction de préformation se déroule à une température indiquée dans le tableau I, pendant une durée également indiquée dans le tableau I. Dans l'exemple 4, à l'issue de l'étape b), le réacteur est dégazé et balayé à l'azote pour éliminer le monomère de préformation non converti. Le métallocène peut être préparé selon le mode opératoire décrit dans la demande de brevet WO 2007054224.

### II.3-Préparation de systèmes catalytiques non conformes à l'invention : exemples 12 à 14

Le système catalytique CE1-1 non conforme à l'invention est préparé selon le procédé divulgué dans la demande de brevet WO 2007054224 et décrit ci-après :
Dans un réacteur contenant du toluène (Tol), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau II. La durée d'activation est de 10 minutes, la température de réaction est de 20 °C. Ses conditions de préparation figurent dans le tableau II.

Le système catalytique CE1-2 non conforme à l'invention est préparé de façon similaire au système catalytique CE1-1 à l'exception du solvant qui est du méthylcyclohexane.

Le système catalytique CE1-3 non conforme à l'invention est préparé selon le mode opératoire suivant :
Dans un réacteur contenant le solvant hydrocarboné méthylcyclohexane (MCH), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau II. La durée d'activation est de 1h, la température de réaction est de 60 °C.

Les systèmes catalytiques CE1-1, CE1-2 et CE1-3 ne sont pas conformes à l'invention en raison de l'absence de l'étape de préformation (étape b). Ce sont des systèmes catalytiques connus de l'état de la technique, notamment de la demande de brevet WO 2007054224. Les systèmes catalytiques CE1-1, CE1-2 sont formés « in situ » : autrement dit la réaction d'activation a lieu directement dans le solvant qui va tenir lieu de solvant de polymérisation, les monomères à polymériser sont alors ajoutés au solvant de polymérisation contenant le système catalytique formé in-situ. Pour CE1-3, les constituants du système catalytique CE1-3 sont mélangés en présence d'un solvant dans lequel a lieu la réaction d'activation pour former une solution catalytique à 0.01 mol/L en métallocène, c'est cette solution catalytique qui est ajoutée au solvant de polymérisation. Cette solution catalytique ne contient pas de monomères de préformation.

### II.4-Conditions de stockage des systèmes catalytiques :

Sauf indication contraire, les systèmes catalytiques C1 à C11 conformes à l'invention sont stockés immédiatement après leur préparation dans des bouteilles fermées hermétiquement sous atmosphère d'azote à -20°C pour C1 à C8 et C10 à C11 et à 23°C pour C9.

Pour l'étude de la stabilité de l'activité catalytique au stockage d'un système catalytique conforme à l'invention, des bouteilles fermées hermétiquement sous azote contenant les systèmes catalytique C3, C4, C6 et C7 sont aussi stockées à 23°C.

Les systèmes catalytiques CE1-1 et CE1-2 non conformes à l'invention ne sont pas stockés et sont utilisés immédiatement pour la synthèse de polymère pour déterminer leur activité catalytique.

Le système catalytique CE1-3 non conforme à l'invention, s'il n'est pas utilisé de suite dans la synthèse de polymère, est stocké immédiatement après sa préparation dans des bouteilles fermées hermétiquement sous atmosphère d'azote à 23°C.

### II.5-Stabilité de l'activité catalytique des systèmes catalytiques : exemples 15 à 28

Les systèmes catalytiques C3, C4, C6, C7, C9 et CE1-3 sont utilisés en polymérisation sans avoir été stockés après leur synthèse ou après avoir été stockés à température ambiante (23°C) pendant des durées variables. Les activités catalytiques des systèmes catalytiques C3, C4, C6, C7 et C9 et CE1-3 sont déterminées, selon qu'ils ont été stockés ou pas, dans les conditions de polymérisation décrites ci-après.
La polymérisation est conduite à 80°C et à une pression initiale de 4 bars dans un réacteur en verre de 500 ml contenant 300 ml de solvant de polymérisation, le méthylcyclohexane, le système catalytique (47 µmol de métal Néodyme) et les monomères, les monomères 1,3-butadiène et l'éthylène étant introduits sous la forme d'un mélange gazeux contenant 20% molaire de 1,3-butadiène. Tous les essais ont été réalisés avec une teneur totale en BOMAG de 5 équivalents molaires par rapport au Néodyme, ce qui a conduit pour certains essais à un ajout supplémentaire de BOMAG dans le réacteur en même temps que le système catalytique. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide. La masse pesée permet de déterminer l'activité catalytique moyenne du système catalytique exprimée en kilogramme de copolymère synthétisé par mole de métal néodyme et par heure (kg/mol.h).

Les résultats d'activité catalytique selon le temps et la température de stockage du système catalytique en solution figurent dans le tableau III.

Il est observé que les activités catalytiques des systèmes catalytiques C3, C4, C6 et C7, préformés avec un mélange d'éthylène et de 1,3-butadiène, sont similaires avant ou après stockage d'au moins 20 jours. Même un stockage du système catalytique C6 de plus de 85 jours à 23°C n'a pas pour effet de diminuer son activité catalytique de façon significative. Le système catalytique C9, préformé avec de l'éthylène seul, présente également une activité catalytique stable après un stockage de plus de 20 jours à 23°C.
En revanche, on observe que le système catalytique CE1-3 non conforme à l'invention ne présente pas une activité catalytique aussi stable au stockage à 23°C. En effet, le système catalytique CE1-3 présente une déchéance en activité catalytique de plus de 20% après seulement 10 jours de stockage à 23°C.

Le maintien de l'activité catalytique sur une longue période permet d'utiliser un seul et même lot de fabrication d'un système catalytique conforme à l'invention sur cette même période sans avoir à procéder à des phases de réajustement des paramètres de procédé de polymérisation et de remise en stabilité de l'outil de polymérisation au cours de cette période, tout en garantissant les spécifications du polymère à synthétiser.

### II.6-Comparaison de l'activité catalytique des systèmes catalytiques conformes à l'invention à celle des systèmes catalytiques de l'état de la technique : exemples 15 à 28 et P1 à P9

Les systèmes catalytiques conformes à l'invention et les systèmes catalytiques non conformes à l'invention sont utilisés chacun dans la polymérisation d'un mélange d'éthylène et de 1,3-butadiène selon le mode opératoire décrit-ci après.
La polymérisation est conduite à 80°C et à une pression initiale de 4 bars dans un réacteur en verre de 500 ml contenant 300 ml de solvant de polymérisation, le méthylcyclohexane ou le toluène, le système catalytique (47 µmol de métal Néodyme) et les monomères, les monomères 1,3-butadiène et l'éthylène étant introduits sous la forme d'un mélange gazeux contenant 20% molaire de 1,3-butadiène. Tous les essais ont été réalisés avec une teneur totale en BOMAG de 5 équivalents molaires par rapport au Néodyme, ce qui a conduit pour certains essais à un ajout supplémentaire de BOMAG dans le réacteur en même temps que le système catalytique. La réaction de polymérisation est stoppée par refroidissement, dégazage du réacteur et ajout de 10 ml d'éthanol. Un anti-oxydant est ajouté à la solution de polymère. Le copolymère est récupéré par séchage en étuve sous vide. La masse pesée permet de déterminer l'activité catalytique moyenne du système catalytique exprimée en kilogramme de copolymère synthétisé par mole de métal néodyme et par heure (kg/mol.h). Les activités catalytiques moyennes calculées pour chacun des systèmes catalytiques figurent dans les tableaux III et IV.

Les exemples 17 à 28 et P1 à P6 sont conformes à l'invention car ils mettent en œuvre un système catalytique conforme à l'invention (C1 à C11).
Les exemples 15 et 16 et P7 à P9 ne sont pas conformes à l'invention car ils mettent en œuvre un système catalytique de l'état de la technique (CE1-1, CE1-2 et CE1-3).
Il est à noter que pour un solvant hydrocarboné de polymérisation donné, le méthylcyclohexane, l'activité catalytique des systèmes catalytiques C1 à C6 et C8 à C11 est du même ordre de grandeur de celles des systèmes catalytiques de l'état de la technique (CE1-1 ou CE1-2).

Enfin, les systèmes catalytiques conformes à l'invention peuvent être synthétisés aussi bien en solvant aromatique (toluène, exemples 7) qu'en solvant aliphatique (méthylcyclohexane, exemple 6) sans que ne soit affectée leur activité catalytique. En effet, l'activité catalytique de C7 (exemple 24) est comparable à celle de C6 synthétisé dans un solvant hydrocarboné aliphatique, le méthylcyclohexane (exemple 22).

**Tableau I**

| **Exemples** | **Métallocène (mol/L)** | **Co-catalyseur (mol/L)** | **Solvant hydrocarboné** | **Durée de préformation (h)** | **Température de préformation (°C)** | **Monomère de préformation** | **Ratio molaire monomère de préformation/métal Nd** | **Système catalytique** |
|---|---|---|---|---|---|---|---|---|
| Ex 1 | 0,005 | 0,011 | MCH | 5 | 40 | Eth/Bde | 60 | C1 |
| Ex 2 | 0,005 | 0,025 | MCH | 1 | 80 | Eth/Bde | 60 | C2 |
| Ex 3 | 0,005 | 0,011 | MCH | 1 | 80 | Eth/Bde | 60 | C3 |
| Ex 4 | 0,005 | 0,011 | MCH | 1 | 80 | Eth/Bde | 60 | C4 |
| Ex 5 | 0,005 | 0,0025 | MCH | 1 | 80 | Eth/Bde | 60 | C5 |
| Ex 6 | 0,02 | 0,044 | MCH | 1 | 80 | Eth/Bde | 60 | C6 |
| Ex 7 | 0,02 | 0,044 | Toluène | 1 | 80 | Eth/Bde | 60 | C7 |
| Ex 8 | 0,005 | 0,011 | MCH | 5 | 40 | Eth | 200 | C8 |
| Ex 9 | 0,02 | 0,044 | MCH | 1 | 80 | Eth | 60 | C9 |
| Ex 10 | 0,02 | 0,044 | MCH | 5 | 40 | Eth | 60 | C10 |
| Ex 11 | 0,02 | 0,044 | MCH | 1 | 80 | Eth/Iso | 85 | C11 |

**Tableau II**

| **Exemples** | **Métallocène (mol/L)** | **Co-catalyseur (mol/L)** | **Solvant hydrocarboné** | **Durée d'activation (min)** | **Température d'activation (°C)** | **Solvant polymérisation** | **Système catalytique** |
|---|---|---|---|---|---|---|---|
| Ex 12 | 0,0001 | 0,0008 | Toluène | 10 | 20 | Toluène | CE1-1 |
| Ex 13 | 0,0001 | 0,0008 | MCH | 10 | 20 | MCH | CE1-2 |
| Ex 14 | 0,01 | 0,022 | MCH | 60 | 60 | MCH | CE1-3 |

**Tableau III**

| **Exemples** | **Système catalytique** | **Durée stockage (jours)** | **Température stockage** | **Solvant polymérisation** | **Activité (kg/mol.h)** | **Mn (kg/mol)** | **Ip** |
|---|---|---|---|---|---|---|---|
| Ex 15 | CE1-3 | 0 | - | MCH | 141 | 54,6 | 1,45 |
| Ex 16 | CE1-3 | 10 | 23 | MCH | 109 | 55,4 | 1,50 |
| Ex 17 | C3 | 0 | - | MCH | 128 | 69,4 | 1,45 |
| Ex 18 | C3 | 27 | 23 | MCH | 130 | 58,4 | 1,30 |
| Ex 19 | C4 | 0 | - | MCH | 108 | 81 | 1,75 |
| Ex 20 | C4 | 27 | 23 | MCH | 112 | 72,3 | 1,40 |
| Ex 21 | C6 | 0 | - | MCH | 116 | 74,2 | 1,50 |
| Ex 22 | C6 | 32 | 23 | MCH | 138 | 59 | 1,30 |
| Ex 23 | C6 | 85 | 23 | MCH | 112 | 58,1 | 1,30 |
| Ex 24 | C7 | 0 | - | MCH | 148 | 67,5 | 1,35 |
| Ex 25 | C7 | 31 | 23 | MCH | 132 | 66,3 | 1,35 |
| Ex 26 | C7 | 85 | 23 | MCH | 129 | 61,5 | 1,35 |
| Ex 27 | C9 | 0 | - | MCH | 141 | 59,6 | 1,30 |
| Ex 28 | C9 | 20 | 23 | MCH | 141 | 73,2 | 1,50 |

**Tableau IV**

| **Exemples** | **Système catalytique** | **Solvant polymérisation** | **Activité (kg/mol.h)** |
|---|---|---|---|
| P1 | C1 | MCH | 148 |
| P2 | C2 | MCH | 132 |
| P4 | C8 | MCH | 176 |
| P5 | C10 | MCH | 154 |
| P6 | C11 | MCH | 123 |
| P7 | CE1-1 | MCH | 159 |
| P8 | CE1-2 | MCH | 135 |
| P9 | CE1-3 | MCH | 109 |

## Revendications

1. Système catalytique à base au moins :
• d'un monomère de préformation étant l'éthylène ou un mélange d'éthylène et d'un diène conjugué
• d'un métallocène de formule (la) ou (Ib)
• d'un composé organométallique à titre de co-catalyseur,
{^{P}(Cp¹)(Cp²)Y} (Ia)
Cp³Cp⁴Y (Ib)
- Y désignant un groupe comportant un atome de métal qui est une terre rare,
- Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
- P étant un groupe pontant les deux groupes Cp¹ et Cp², et comprenant un atome de silicium ou de carbone.

2. Système catalytique selon la revendication 1 dans lequel le co-catalyseur est un organomagnésien, de préférence un diorganomagnésien.

3. Système catalytique selon l'une quelconque des revendications 1 à 2 dans lequel le co-catalyseur est un composé organométallique comportant un groupe alkyle lié à l'atome de métal.

4. Système catalytique selon l'une quelconque des revendications 1 à 3 dans lequel le co-catalyseur est un dialkylmagnésien ou un halogénure d'alkylmagnésien, préférentiellement le butyloctylmagnésium ou le chlorure de butylmagnésium, plus préférentiellement le butyloctylmagnésium.

5. Système catalytique selon l'une quelconque des revendications 1 à 4 dans lequel Cp¹ et Cp² sont identiques et sont choisis dans le groupe constitué par les groupes fluorényles substitués et le groupe fluorényle non substitué de formule C₁₃H₈, préférentiellement Cp¹ et Cp² représentent chacun un groupe fluorényle non substitué de formule C₁₃H₈.

6. Système catalytique selon l'une quelconque des revendications 1 à 5, dans lequel le symbole Y représente le groupe Met-G, avec Met désignant un atome de métal qui est une terre rare et G désignant un groupe comprenant le motif borohydrure BH₄ ou désignant un atome d'halogène X choisi dans le groupe constitué par le chlore, le fluor, le brome et l'iode, de préférence G désignant le chlore ou le groupe de formule (II)
(BH₄)_{(1+y)-}L_{y}-Nₓ (II)
dans laquelle
- L représente un métal alcalin choisi dans le groupe constitué par le lithium, le sodium et le potassium,
- N représente une molécule d'un éther, de préférence diéthyléther ou tétrahydrofuranne,
- x, nombre entier ou non, est égal ou supérieur à 0,
- y, nombre entier, est égal ou supérieur à 0.

7. Système catalytique selon l'une quelconque des revendications 1 à 6 dans lequel la terre rare est un lanthanide dont le numéro atomique varie de 57 à 71, de préférence le néodyme, Nd.

8. Système catalytique selon l'une quelconque des revendications 1 à 7 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone, de préférence un méthyle.

9. Système catalytique selon l'une quelconque des revendications 1 à 8 dans lequel le métallocène est le borohydrure de diméthylsilyl bis-fluorényle néodyme de formule (III) :
[Me₂Si(Flu)₂Nd(µ-BH₄)₂Li(THF)] (III)
Flu représentant le groupe C₁₃H₈.

10. Système catalytique selon l'une quelconque des revendications 1 à 9 dans lequel le diène conjugué est un 1,3-diène, de préférence le 1,3-butadiène ou l'isoprène.

11. Système catalytique selon l'une quelconque des revendications 1 à 10 dans lequel le rapport molaire du monomère de préformation sur le métal du métallocène a une valeur allant de 5 à 1000, préférentiellement de 10 à 500.

12. Système catalytique selon l'une quelconque des revendications 1 à 11 dans lequel le rapport molaire de co-catalyseur sur le métal du métallocène a une valeur allant de 0,5 à 20, préférentiellement de 1 à 10.

13. Système catalytique selon l'une quelconque des revendications 1 à 12, lequel système catalytique comprend un solvant hydrocarboné et dans lequel la concentration molaire en métal du métallocène dans la solution catalytique a une valeur allant de 0,0001 à 0,05 mol/l, préférentiellement de 0,001 à 0,03 mol/l.

14. Procédé de préparation d'un système catalytique défini à l'une quelconque des revendications 1 à 13 qui comprend les étapes a) et b) suivantes :
- a) faire réagir dans un solvant hydrocarboné le co-catalyseur et le métallocène,
- b) faire réagir le monomère de préformation avec le produit de réaction de l'étape a).

15. Procédé de préparation d'un polymère qui comprend la polymérisation d'un monomère M en présence d'un système catalytique défini à l'une quelconque des revendications 1 à 13, le monomère M étant de préférence choisi dans le groupe des monomères constitués par les diènes conjugués, l'éthylène, les α-monooléfines et leurs mélanges.

## Patentansprüche

1. Katalytisches System auf Basis von mindestens:
• einem Vorbildungsmonomer, bei dem es sich um Ethylen oder eine Mischung von Ethylen und einem konjugierten Dien handelt,
• einem Metallocen der Formel (Ia) oder (Ib),
• einer metallorganischen Verbindung als Cokatalysator,
{P(Cp¹)(Cp²)Y} (Ia)
Cp³Cp⁴Y (Ib),
- wobei Y für eine Gruppe steht, die ein Metallatom umfasst, bei dem es sich um ein Seltenerdmetall handelt,
- wobei Cp¹, Cp², Cp³ und Cp⁴, die gleich oder verschieden sind, aus der Gruppe bestehend aus Fluorenylgruppen, Cyclopentadienylgruppen und Indenylgruppen ausgewählt sind, wobei die Gruppen substituiert oder unsubstituiert sind,
- wobei P für eine Gruppe steht, die die beiden Gruppen Cp¹ und Cp² verbrückt und ein Silicium- oder Kohlenstoffatom umfasst.

2. Katalytisches System nach Anspruch 1, wobei es sich bei dem Cokatalysator um eine Organomagnesiumverbindung, vorzugsweise eine Diorganomagnesiumverbindung, handelt.

3. Katalytisches System nach einem der Ansprüche 1 bis 2, wobei es sich bei dem Cokatalysator um eine metallorganische Verbindung mit einer an das Metallatom gebundenen Alkylgruppe handelt.

4. Katalytisches System nach einem der Ansprüche 1 bis 3, wobei es sich bei dem Cokatalysator um eine Dialkylmagnesiumverbindung oder ein Alkylmagnesiumhalogenid, vorzugsweise Butyloctylmagnesium, Dibutylmagnesium, Butylmethylmagnesium oder Butylmagnesiumchlorid, weiter bevorzugt Butyloctylmagnesium, handelt.

5. Katalytisches System nach einem der Ansprüche 1 bis 4, wobei Cp¹ und Cp² gleich sind und aus der Gruppe bestehend aus substituierten Fluorenylgruppen und unsubstituierte Fluorenylgruppen der Formel C₁₃H₈ ausgewählt sind, vorzugsweise Cp¹ und Cp² jeweils für eine unsubstituierte Fluorenylgruppe der Formel C₁₃H₈ stehen.

6. Katalytisches System nach einem der Ansprüche 1 bis 5, wobei das Symbol Y für die Gruppe Met-G steht, wobei Met für ein Metallatom steht, bei dem es sich um ein Seltenerdmetall handelt, und Die für eine Gruppe, die die Borhydrid-Einheit BH₄ umfasst, oder ein Halogenatom X, das aus Chlor, Fluor, Brom und Iod ausgewählt ist, wobei G vorzugsweise für Chlor oder die Gruppe der Formel (II) steht:
(BH₄)_{(1+y)}L_{y}-Nₓ (II),
wobei
- L für ein Alkalimetall steht, das aus der Gruppe bestehend aus Lithium, Natrium und Kalium ausgewählt ist,
- N für ein Molekül eines Ethers, vorzugsweise Diethylether oder Tetrahydrofuran, steht,
- x, das ganzzahlig oder nicht ganzzahlig ist, gleich oder größer als 0 ist,
- y, das ganzzahlig ist, gleich oder größer als 0 ist.

7. Katalytisches System nach einem der Ansprüche 1 bis 6, wobei es sich bei dem Seltenerdmetall um ein Lanthanid mit einer Ordnungszahl von 57 bis 71, vorzugsweise Neodym, Nd, handelt.

8. Katalytisches System nach einem der Ansprüche 1 bis 7, wobei die Brücke P der Formel ZR¹R² entspricht, wobei Z für ein Silicium- oder Kohlenstoffatom steht und R¹ und R², die gleich oder verschieden sind, jeweils für eine Alkylgruppe mit 1 bis 20 Kohlenstoffatomen, vorzugsweise ein Methyl, stehen.

9. Katalytisches System nach einem der Ansprüche 1 bis 8, wobei es sich bei dem Metallocen um (Dimethylsilyl)bisfluorenylneodymborhydrid der Formel (III) handelt:
[Me₂Si(Flu)₂Nd(µ-BH₄)₂Li(THF)] (III),
wobei Flu für die C₁₃H₈-Gruppe steht.

10. Katalytisches System nach einem der Ansprüche 1 bis 9, wobei es sich bei dem konjugierten Dien um ein 1,3-Dien, vorzugsweise 1,3-Butadien oder Isopren, handelt.

11. Katalytisches System nach einem der Ansprüche 1 bis 10, wobei das Molverhältnis von Vorbildungsmonomer zu Metall des Metallocens einen Wert im Bereich von 5 bis 1000, vorzugsweise von 10 bis 500, aufweist.

12. Katalytisches System nach einem der Ansprüche 1 bis 11, wobei das Molverhältnis von Cokatalysator zu Metall des Metallocens einen Wert im Bereich von 0,5 bis 20, vorzugsweise von 1 bis 10, aufweist.

13. Katalytisches System nach einem der Ansprüche 1 bis 12, wobei das katalytische System ein Kohlenwasserstofflösungsmittel umfasst und wobei die molare Konzentration ein Metall des Metallocens in der katalytischen Lösung einen Wert im Bereich von 0,0001 bis 0,05 mol/l, vorzugsweise von 0,001 bis 0,03 mol/l, aufweist.

14. Verfahren zur Herstellung eines katalytischen Systems gemäß einem der Ansprüche 1 bis 13, das die folgenden Schritte a) und b) umfasst.
- a) Umsetzen des Cokatalysators und des Metallocens in einem Kohlenwasserstofflösungsmittel,
- b) Umsetzen des Vorbildungsmonomers mit dem Umsetzungsprodukt aus Schritt a).

15. Verfahren zur Herstellung eines Polymers, das die Polymerisation eines Monomers M in Gegenwart eines katalytischen Systems gemäß einem der Ansprüche 1 bis 13 umfasst, wobei das Monomer M vorzugsweise aus der Gruppe der Monomere bestehend aus konjugierten Dienen, Ethylen, α-Monoolefinen und Mischungen davon ausgewählt wird.

## Claims

1. Catalytic system based at least:
• on a preformation monomer which is ethylene or a mixture of ethylene and of a conjugated diene,
• on a metallocene of formula (Ia) or (Ib),
• on an organometallic compound as cocatalyst,
{P(Cp¹)(Cp²)Y} (Ia)
Cp³Cp⁴Y (Ib)
- Y denoting a group comprising a metal atom which is a rare earth metal,
- Cp¹, Cp², Cp³ and Cp⁴, which are identical or different, being selected from the group consisting of fluorenyl groups, cyclopentadienyl groups and indenyl groups, the groups being substituted or unsubstituted,
- P being a group bridging the two Cp¹ and Cp² groups and comprising a silicon or carbon atom.

2. Catalytic system according to Claim 1, in which the cocatalyst is an organomagnesium compound, preferably a diorganomagnesium compound.

3. Catalytic system according to either one of Claims 1 and 2, in which the cocatalyst is an organometallic compound comprising an alkyl group bonded to the metal atom.

4. Catalytic system according to any one of Claims 1 to 3, in which the cocatalyst is a dialkylmagnesium compound or an alkylmagnesium halide, preferably butyloctylmagnesium or butylmagnesium chloride, more preferably butyloctylmagnesium.

5. Catalytic system according to any one of Claims 1 to 4, in which Cp¹ and Cp² are identical and are selected from the group consisting of substituted fluorenyl groups and the unsubstituted fluorenyl group of formula C₁₃H₈, preferably Cp¹ and Cp² each represent an unsubstituted fluorenyl group of formula C₁₃H₈.

6. Catalytic system according to any one of Claims 1 to 5, in which the symbol Y represents the group Met-G, with Met denoting a metal atom which is a rare earth metal and G denoting a group comprising the borohydride BH₄ unit or denoting a halogen atom X selected from the group consisting of chlorine, fluorine, bromine and iodine, preferably denoting G denotes chlorine or the group of formula (II):
(BH₄)_{(1+y)}-L_{y}-Nₓ (II)
in which:
- L represents an alkali metal selected from the group consisting of lithium, sodium and potassium,
- N represents a molecule of an ether, preferably diethyl ether or tetrahydrofuran,
- x, which is or is not an integer, is equal to or greater than 0,
- y, which is an integer, is equal to or greater than 0.

7. Catalytic system according to any one of Claims 1 to 6, in which the rare earth metal is a lanthanide, the atomic number of which varies from 57 to 71, preferably neodymium, Nd.

8. Catalytic system according to any one of Claims 1 to 7, in which the bridge P corresponds to the formula ZR¹R², Z representing a silicon or carbon atom and R¹ and R², which are identical or different, each representing an alkyl group comprising from 1 to 20 carbon atoms, preferably a methyl.

9. Catalytic system according to any one of Claims 1 to 8, in which the metallocene is the (dimethylsilyl)bisfluorenylneodymium borohydride of formula (III):
[Me₂Si(Flu)₂Nd(µ-BH₄)₂Li(THF)] (III)
Flu representing the C₁₃H₈ group.

10. Catalytic system according to any one of Claims 1 to 9, in which the conjugated diene is a 1,3-diene, preferably 1,3-butadiene or isoprene.

11. Catalytic system according to any one of Claims 1 to 10, in which the molar ratio of the preformation monomer to the metal of the metallocene has a value ranging from 5 to 1000, preferably from 10 to 500.

12. Catalytic system according to any one of Claims 1 to 11, in which the molar ratio of cocatalyst to the metal of the metallocene has a value ranging from 0.5 to 20, preferably from 1 to 10.

13. Catalytic system according to any one of Claims 1 to 12, which comprises a hydrocarbon solvent and in which the molar concentration of metal of the metallocene in the catalytic solution has a value ranging from 0.0001 to 0.05 mol/l, preferably from 0.001 to 0.03 mol/l.

14. Process for the preparation of a catalytic system defined in any one of Claims 1 to 13, which comprises the following stages a) and b):
- a) reacting, in a hydrocarbon solvent, the cocatalyst and the metallocene,
- b) reacting the preformation monomer with the reaction product from stage a).

15. Process for the preparation of a polymer which comprises the polymerization of a monomer M in the presence of a catalytic system defined in any one of Claims 1 to 13, the monomer M being preferably selected from the group of the monomers consisting of conjugated dienes, ethylene, α-monoolefins and their mixtures.
